# EUROPÄISCHE PATENTSCHRIFT

(11) **EP 0 798 145 B1**
(45) Veröffentlichungstag und Bekanntmachung des Hinweises auf die Patenterteilung: **17.05.2000**
(21) Anmeldenummer: 97102721.4
(22) Anmeldetag: 20.02.1997
(51) Int. Cl.: B60K 17/08, F16H 3/089, F16H 63/18, F16H 57/02

(54) **Zahnräderwechselgetriebe für ein Kraftfahrzeug**
Change wheel gear for a vehicle
Boîte de vitesses pour un véhicule automobile

(30) Priorität: 29.03.1996 DE 19612690
(43) Veröffentlichungstag der Anmeldung: 01.10.1997
(73) Patentinhaber: Micro Compact Car smart GmbH, 71272 Renningen (DE); GETRAG Getriebe- und Zahnradfabrik Hermann Hagenmeyer GmbH & Cie, 71636 Ludwigsburg (DE)
(72) Erfinder: Bender, Helmut, 74385 Pleidelsheim (DE); Rühle, Günter, 74369 Löchgau (DE); Diel, Henning, 71636 Ludwigsburg (DE)
(74) Vertreter: Weiss, Klaus

(56) Entgegenhaltungen:
- EP-B- 0 242 338
- DE-A- 3 926 570
- DE-A- 4 031 571
- DE-A- 4 226 576
- FR-A- 2 516 457
- US-A- 5 224 393

## Beschreibung

Die Erfindung bezieht sich auf ein Zahnräderwechselgetriebe nach dem Oberbegriff von Patentanspruch 1.

Bei einem bekannten Zahnräderwechelgetriebe der eingangs genannten Art (EP 0 242 338 B1) sind zwei Zahnradstufen zur Bildung von Vorwärtsgängen und eine Zahnradstufe zur Bildung eines Rückwärtsganges jeweils als Antriebsverbindung zwischen Ein- und Ausgangswelle verwendet. Die zur Ausgangswelle drehfest und axial verschiebbar angeordnete Schiebemuffe einer Wechselkupplung zur wahlweisen Einschaltung der beiden Zahnradstufen zur Bildung von Vorwärtsgängen ist zusätzlich mit einer Laufverzahnung zur Verwendung als ein ausgangsseitiges Zahnrad der Zahnradstufe zur Bildung des Rückwärtsganges versehen, wobei diese Zahnradstufe dadurch als Antriebsverbindung wirksam wird, daß die Schiebemuffe in ihrer axiale Neutralstellung gebracht und danach das Zwischenzahnrad in die Laufverzahnungen der Schaltschiebemuffe und des zugehörigen eingangsseitigen Zahnrades auf der Eingangswelle eingeschoben wird; eine Synchronisierung des Rückwärtsganges ist demnach nicht gegeben.

Bei dem bekannten Zahnräderwechselgetriebe ist die Ausgangswelle mit dem Ausgleichsgetriebe durch zwei wahlweise einschaltbare Zahnradstufen in Antriebsverbindung bringbar, so daß sich insgesamt vier Vorwärtsgänge in Verbindung mit den beiden anderen Zahnradstufen ergeben.

Bei dem bekannten Zahnräderwechselgetriebe wird eine Verringerung der Zahnradstufen gegenüber einem 4-gängigen Zahnräderwechelgetriebe angestrebt, bei welchem für jeden Vorwärtsgang eine Zahnradstufe - also insgesamt vier Zahnradstufen - zwischen Ein- und Ausgangswelle vorgesehen sind.

Bei dem bekannten Zahnräderwechselgetriebe sind die beiden eingangsseitigen Zahnräder der Vorwärtsgang-Zahnradstufen auf die Eingangswelle aufgekeilt.

Bei dem bekannten Zahnräderwechselgetriebe soll lt. Beschreibung der betreffenden Druckschrift auch eine dritte Zahnradstufe zur Bildung von Vorwärtsgängen als Antriebsverbindung zwischen Ein- und Ausgangswelle möglich sein, um ein 6-Gang-Getriebe zu erhalten. Über eine Realisierung eines solchen 6-Gang-Getriebes ist in der Druckschrift jedoch nichts weiter ausgeführt.

Bei einem bekannten Zahnräderwechselgetriebe anderer Art(CH-PS 205 282),bei welchem die eingangsseitigen Zahnräder der zur Bildung der Vorwärtsgänge II bis V als Antriebsverbindung zwischen Ein- und Ausgangswelle verwendeten Zahnradstufen als Losräder drehbar auf der Eingangswelle sitzen,sind für die Zahnradstufen zur Bildung des niedrigsten Vorwärtsganges I und des Rückwärtsganges je ein besonderes,drehfest auf der Eingangswelle angeordnetes Eingangszahnrad sowie ein gemeinsames,als Schieberad und lose auf der Ausgangswelle sitzendes Ausgangszahnrad mit mit drei Zahnkränzen vorgesehen.Der eine der drei Zahnkränze ist fakultativ mit den zugehörigen Eingangszahnrädern in Kämmeingriff bringbar,wobei jeweils einer der beiden anderen Zahnkränze mit ein und demselben Zahnrad im Kämmeingriff steht,welches dem Ausgleichsgetriebe zugeordnet und dabei konzentrisch zu dessen Zentralachse sowie bewegungsfest zu dessen eingangsseitigem Getriebeglied angeordnet ist.Das Ausgangszahnrad mit den drei Zahnkränzen und das der Zahnradstufe zur Bildung des Vorwärtsganges V mit der niedrigsten Übersetzung zugehörige Ausgangszahnrad sind sowohl an den entgegengesetzten Enden der Ausgangswelle als auch in durch eine Gehäusezwischenwand voneinander getrennten Gehäusekammern des Getriebegehäuses angeordnet.
Bei einem weiteren bekannten Zahnräderwechselgetriebe anderer Art(DE 30 37 990 A1)sind zwei zueinander konzenrische Eingangswellen einerseits durch je eine Lastschaltkupplung mit einem Antriebsmotor und andererseits durch Zahnradstufen zur Bildung von Vorwärtsgängen und einem Rückwärtsgang mit einer parallelen Ausgangswelle in Antriebsverbindung bringbar.Die Zahnradstufen bzw. deren Schaltmittel sind über eine Schaltwalze betätigbar,welche durch einen Elektromotor angetrieben ist.
Schliesslich war noch ein weiteres Zahnräderwechselgetriebe anderer Art bekannt(DE 41 26 161 C2),bei welchem die Drehachsen einer Eingangswelle und einer Ausgangswelle sowie die Zentralachse eines Ausgleichsgetriebes sowohl zueinander parallel als auch in einer Hauptebene eines Getriebegehäuses angeordnet sind,welches in einer zu den Drehachsen senkrecht liegenden Trennebene in ein sämtliche Zahnradstufen für die Bildung der Getriebegänge sowie das Ausgleichsgetriebe anteilig aufnehmendes Rädergehäuse und in ein eine Trenn- bzw.Anfahrkupplung vollständig und das Ausgleichsgetriebe anteilig aufnehmendes Adaptergehäuse unterteilt ist.Sowohl aur der Eingangswelle als auch auf der Ausgangswelle sitzen Losräder von Zahnradstufen zur Bildung von Vorwärtsgängen,welche über drei zueinander wie auch zu den Getriebewellen parallel liegende Schaltstangen betätigt werden,die auf der einen Seite der Hauptebene angeordnet sind.Auf des anderen Seite der Hauptebene ist ein Lagerbolzen für die drehbare Lagerung von Zwischenzahnrädern einer Zahnradstufe zur Bildung des Rückwärtsganges parallel zur Eingangswelle angeordnet,welcher mit seinem einen Bolzenende in eine Aufnahmebohrung des Rädergehäuses und mit seinem anderen Bolzenende in eine Aufnahmebohrung des Adaptergehäuses eingesetzt ist.Die Aufnahmebohrung des Adaptergehäuses mündet in einer in der Trennebene liegenden Trennfläche aus.

Die der Erfindung zugrunde liegende Aufgabe besteht im wesentlichen darin, ein wenigstens fünf Vorwärtsgänge und einen synchronisierten Rückwärtsgang aufweisendes Zahnräderwechselgetriebe mit einer geringstmöglichen Teilevielfalt zu schaffen.

Die erläuterte Aufgabe ist gemäß der Erfindung mit den Merkmalen von Patenanspruch 1 in vorteilhafter Weise gelöst.

Bei dem Zahnräderwechselgetriebe nach der Erfindung ist der Rückwärtsgang synchronisiert, ein besonderes eingangsseitiges Zahnrad für die Zahnradstufe zur Bildung des Rückwärtsganges eingespart und die Eingangswelle mit den drei Zahnrädern der Zahnradstufen zur Bildung von fünf oder sechs Vorwärtsgängen einteilig herstellbar; wobei diese drei Zahnradstufen zusammen mit der Zahnradstufe zur Bildung des Rückwärtsganges nur zwei Wechselkupplungen zur jeweiligen Einschaltung als Antriebsverbindung zwischen Ein- und Ausgangswelle benötigen, wenn die Ausgestaltung nach den Patentansprüchen 2 und 5 getroffen ist.

Bei dem Zahnräderwechselgetriebe nach der Erfindung können alle Zahnräder der Eingangswelle im Wälzverfahren hergestellt werden, wenn die Ausgestaltung nach den Patentansprüchen 3 und 4 getroffen ist.

Die Patentansprüche 6 bis 10 sind auf eine Erweiterung des Zahnräderwechselgetriebes nach der Erfindung auf sieben oder acht Vorwärtsgänge unter Beibehaltung der Vorteile der 5- bzw. 6-gängigen Ausführungsform abgestellt.

Die Patentansprüche 11 und 12 haben eine vorteilhafte Betätigung der Kupplungen des Zahnräderwechselgetriebes nach der Erfindung zum Gegenstand.

Die Patentansprüche 13 bis 16 sind auf eine vorteilhafte Ausgestaltung eines Getriebegehäuses des Zahnräderwechselgetriebes nach der Erfindung abgestellt.

Einzelheiten der Erfindung sind im folgenden anhand von drei in der Zeichnung schematisch dargestellten Ausführungsformen näher beschrieben. In der Zeichnung bedeuten
- Fig. 1: ein Getriebeschema eines Zahnräderwechselgetriebes nach der Erfindung in einer ersten Ausführungsform mit fünf oder sechs Vorwärtsgängen,
- Fig. 2: eine Tabelle der in den einzelnen Gängen wirksamen Zahnradstufen bzw. -kupplungen bei der ersten Ausführungsform des Zahnräderwechselgetriebes nach der Erfindung mit fünf Vorwärtsgängen,
- Fig. 3: eine Tabelle der in den einzelnen Gängen wirksamen Zahnradstufen bzw. -kupplungen bei der ersten Ausführungsform des Zahnräderwechselgetriebes nach der Erfindung mit sechs Vorwärtsgängen,
- Fig. 4: eine detailliertere Darstellung des Zahnräderwechselgetriebes von Fig. 1 anhand eines Längsschnittes nach Linie IV-IV von Fig. 5,
- Fig. 5: eine Seitenansicht des Zahnräderwechselgetriebes von Fig. 4, gesehen in Pfeilrichtung V,
- Fig. 6: einen weiteren Längsschnitt durch das Zahnräderwechselgetriebe von Fig. 4 nach Linie VI-VI in Fig. 5,
- Fig. 7: ein Getriebeschema eines Zahnräderwechselgetriebes nach der Erfindung in einer zweiten Ausführungsform als Variante der Ausführungsform von Fig. 1.
- Fig. 7a: eine Tabelle der in den einzelnen Gängen wirksamen Zahnradstufen bzw. -kupplungen bei der zweiten Ausführungsform des Zahnräderwechselgetriebes nach der Erfindung gemäß Fig. 7 mit sieben Vorwärtsgängen,
- Fig. 8: ein Getriebeschema eines Zahnräderwechselgetriebes nach der Erfindung in einer dritten Ausführungsform als Variante der Ausführungsform von Fig. 1, und
- Fig. 8a: eine Tabelle der in den einzelnen Gängen wirksamen Zahnradstufen bzw. -kupplungen bei der dritten Ausführungsform des Zahnräderwechselgetriebes nach der Erfindung gemäß Fig. 8 mit sieben Vorwärtsgängen.

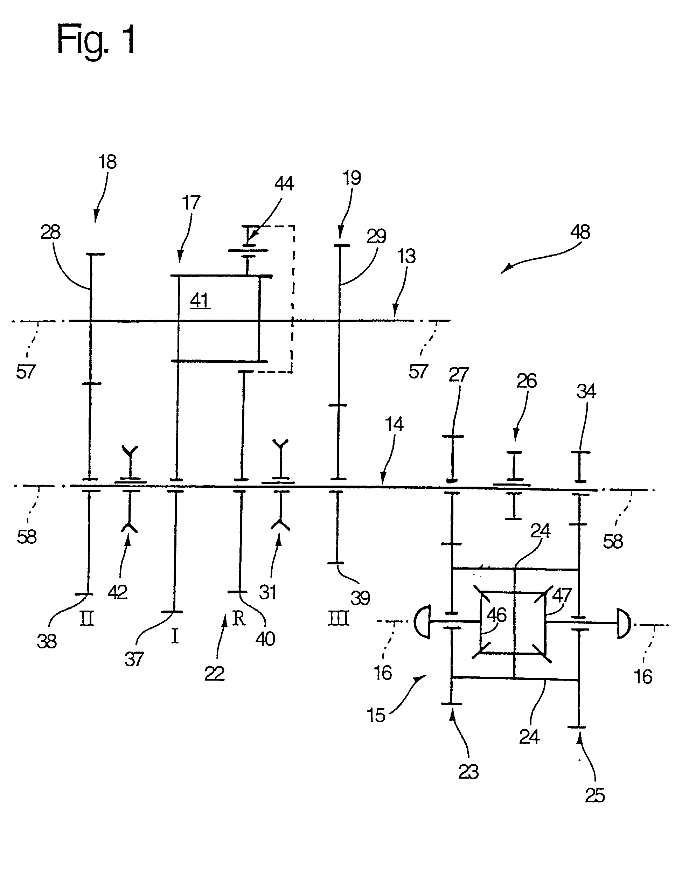

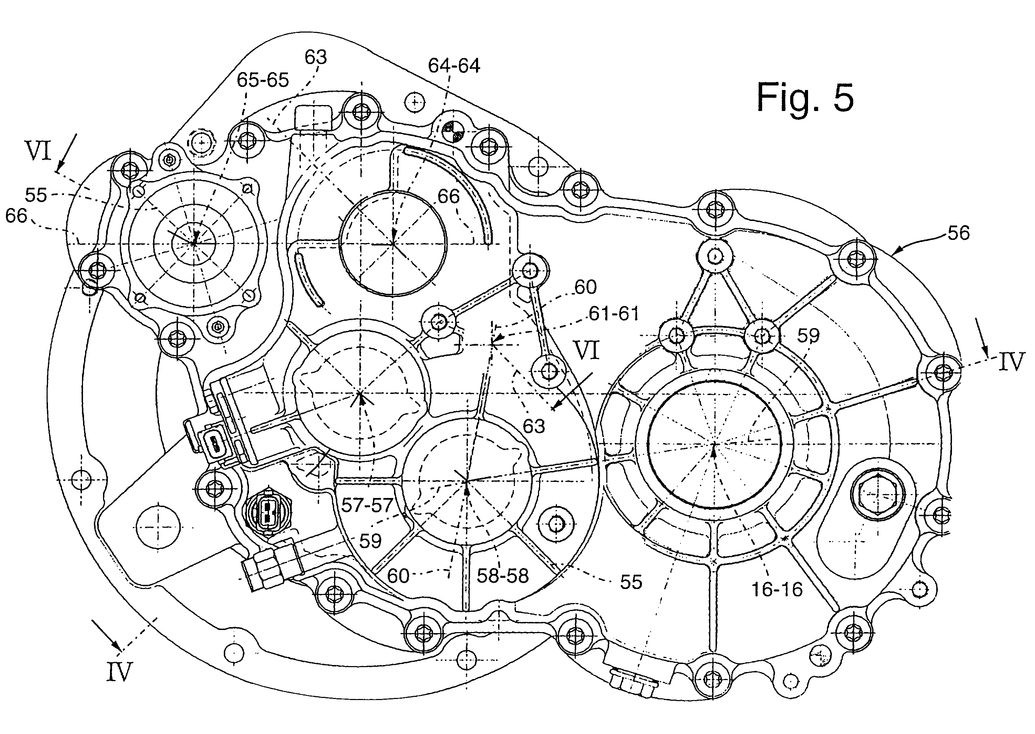

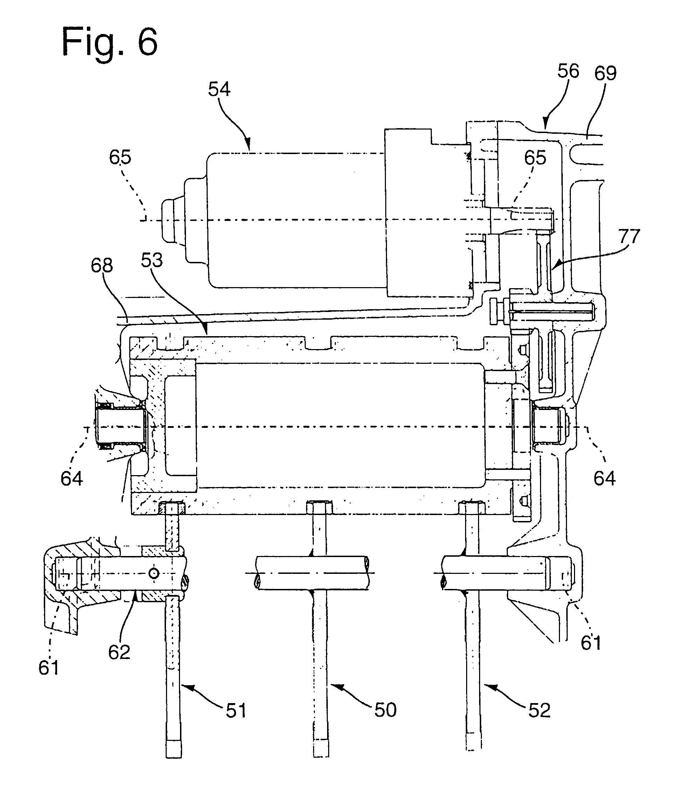

Unter Bezugnahme auf die erste Ausführungsform der Fign. 1 und 4 bis 6 ist ein Zahnräderwechselgetriebe 48 mit einer Eingangswelle 13, einer parallelen Ausgangswelle 14 und einem in bezug auf seine Zentralachse 16-16 zu den Getriebewellen 13, 14 parallelen Ausgleichsgetriebe 15 für eine Antriebsachse versehen. Ein- und Ausgangswelle 13 und 14 sind durch drei Zahnradstufen 17 bis 19 zur Bildung von Vorwärtsgängen und durch eine Zahnradstufe 22 zur Bildung eines Rückwärtsganges miteinander verbunden.

Das drehfest zur Eingangswelle 13 angeordnete Eingangszahnrad 41 der die höchste Übersetzung der drei Zahnradstufen 17 bis 19 aufweisenden Zahnradstufe 17 kämmt außer mit dem dieser Zahnradstufe 17 zugehörigen ausgangsseitigen Zahnrad 37 auf der Ausgangswelle 14 zusätzlich noch mit dem die Drehsinnumkehr vermittelnden und für sich drehbar gelagerten Zwischenzahnrad 44 der Zahnradstufe 22, welches seinerseits mit dem ausgangsseitigen Zahnrad 40 der Zahnradstufe 22 auf der Ausgangswelle 14 kämmt.

Das eingangsseitige Zahnrad 29 der die niedrigste Übersetzung der drei Zahnradstufen 17 bis 19 aufweisenden Zahnradstufe 19 ist zur Eingangswelle 13 drehfest angeordnet und kämmt mit einem auf der Ausgangswelle 14 drehbar gelagerten Zahnrad 39, welches mit dem benachbarten ausgangsseitigen Zahnrad 40 der Zahnradstufe 22 über eine Wechselkupplung 31 mit der Ausgangswelle 14 fakultativ kuppelbar ist.

Während die Zahnradstufe 19 axial zwischen dem eingangsseitigen Zahnrad 41 und dem Ausgleichsgetriebe 15 angeordnet ist, liegt die von den drei Zahnradstufen 17 bis 19 die mittlere Übersetzung aufweisende Zahnradstufe 18 an dem entgegengesetzt zum Ausgleichsgetriebe 15 liegenden Wellenende der Eingangswelle 13, wobei ihr eingangsseitiges Zahnrad 28 drehfest auf der Eingangswelle 13 sitzt und mit dem drehbar auf der Ausgangswelle 14 gelagerten ausgangsseitigen Zahnrad 38 kämmt, welches zusammen mit dem benachbarten ausgangsseitigen Zahnrad 37 der Zahnradstufe 17 durch eine Wechselkupplung 42 mit der Ausgangswelle 14 verbunden ist.

Die eingangsseitigen Zahnräder 28, 29 und 41 der Zahnradstufen 17 bis 19 und 22 sind mit der Eingangswelle einteilig ausgebildet und im Wälzverfahren hergestellt. Dieses gegenüber einem Stoßvorgang vorteilhaftere Herstellungsverfahren ist durch die erfindungsgemäße Anordnung der beiden Zahnräder 28 und 29 relativ zum Zahnrad 41 ermöglicht, wobei die Einteiligkeit von Zahnrädern und Eingangswelle als besonders vorteilhaft anzusehen ist.

Das Ausgleichsgetriebe 15 weist in der üblichen Weise ein den Lagerbolzen der umlaufenden Kegelräder halterndes rotierendes Ausgleichsgetriebegehäuse 24 auf, welches das eingangsseitige Getriebeglied bildet und durch zwei Zahnradstufen 23 und 25 mit der Ausgangswelle 14 verbunden ist. Die eingangsseitigen Zahnräder 27 und 34 der beiden Zahnradstufen 23 und 25 sind auf der Ausgangswelle 14 drehbar gelagert und durch eine Wechselkupplung 26 mit der Ausgleichswelle 14 verbunden. Die in bezug auf die Zentralachse 16-16 zentrischen Kegelräder 46 und 47 des Ausgleichsgetriebes 15 sind in der üblichen Weise durch Gelenke mit jeweils einem Fahrzeugrad kuppelbar.

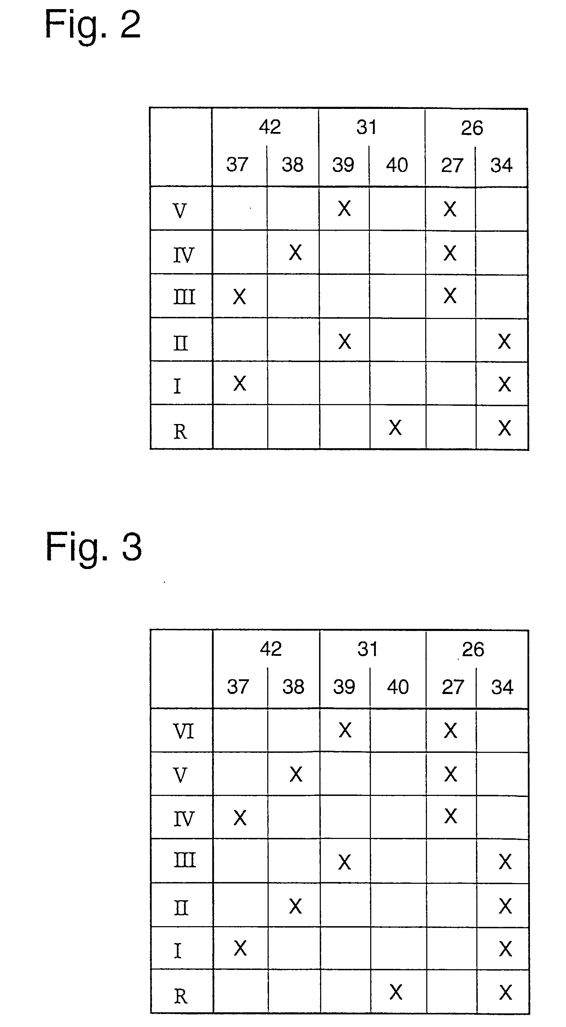

Das Zahnräderwechselgetriebe 48 kann gemäß der Tabelle der Fig. 2 als 5-Gang-Getriebe arbeiten, bei dem sich eine progressive Gangstufung dadurch ergibt, daß die mittlere Übersetzung der Zahnradstufe 18 in Verbindung mit der die höhere Übersetzung der beiden Zahnradstufen 23 und 25 aufweisenden Zahnradstufe 25 zwischen dem I. und dem III. Gang nicht verwendet wird. In bezug auf den Kraftfluß in den fünf Vorwärtsgängen I bis V und im Rückwärtsgang R ist die Tabelle selbstinterpretierend.

Das Zahnräderwechselgetriebe 48 kann gemäß der Tabelle der Fig. 3 als 6-Gang-Getriebe arbeiten, da hier die mittlere Übersetzung der Zahnradstufe 18 in Verbindung mit der Zahnradstufe 25 des Ausgleichsgetriebes 15 zur Bildung des II. Ganges verwendet ist. In bezug auf den Kraftfluß in den sechs Vorwärtsgängen I bis VI und im Rückwärtsgang R ist auch diese Tabelle selbstinterpretierend.

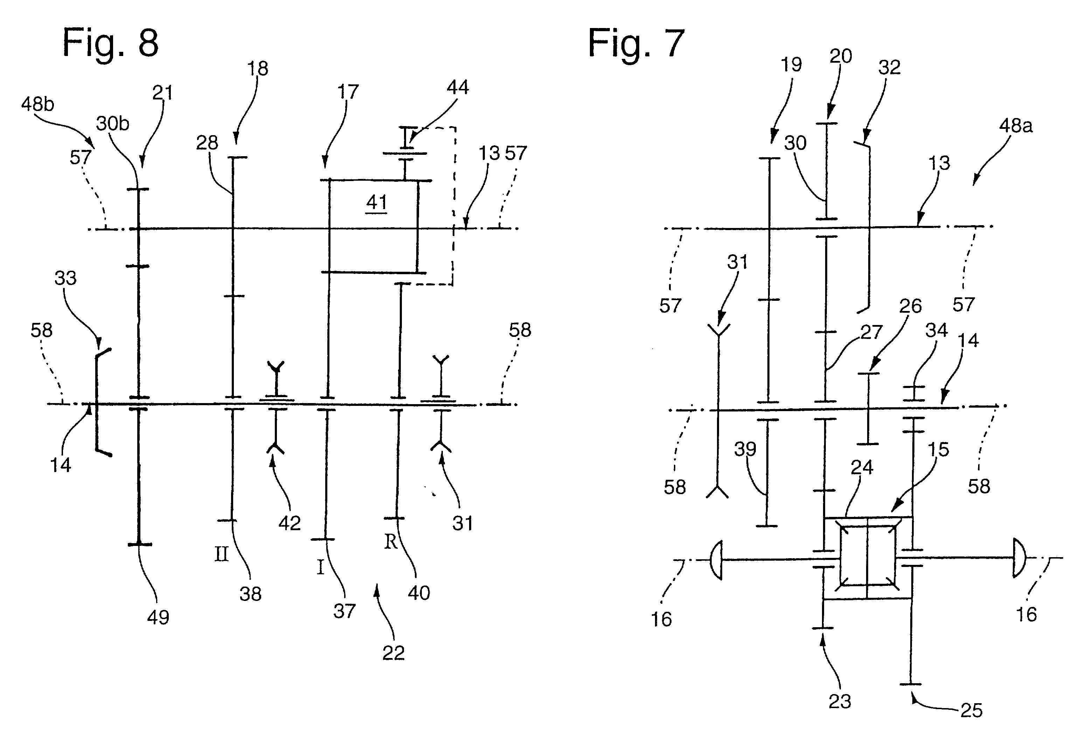

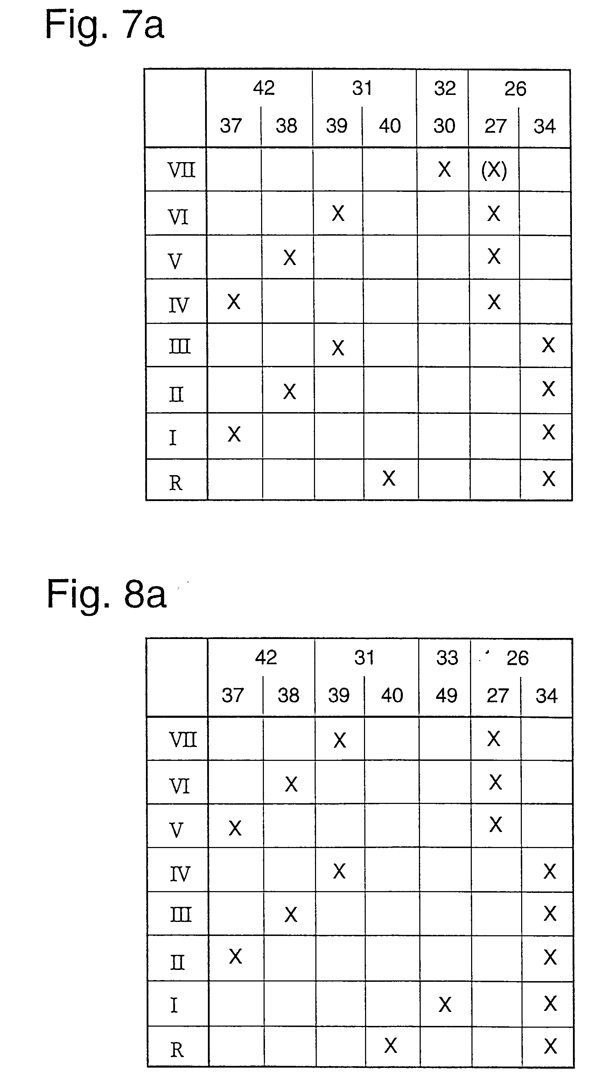

Bei der Ausführungsform 48a der Fig. 7 des erfindungsgemäßen Zahnräderwechselgetriebes ist ein zusätzlicher VII. Gang dadurch gebildet, daß auf der Eingangswelle 13 ein eingangsseitiges Zahnrad 30 einer zusätzlichen Zahnradstufe 20 drehbar gelagert und durch eine Kupplung 32 mit der Eingangswelle 13 kuppelbar ist. Diese zusätzliche vierte Zahnradstufe 20 - für deren ausgangsseitiges Zahnrad das eingangsseitige Zahnrad 27 der Zahnradstufe 23 des Ausgleichsgetriebes 15 verwendet ist - weist von allen vier Zahnradstufen 17 bis 20 (die Ausführungsform 48a ist im übrigen mit der Ausführungsform 48 der Fig. 1 identisch) die niedrigste Übersetzung auf. Die Übersetzung des VII. Ganges ergibt sich dann gemäß der Tabelle der Fig. 7a durch multiplikative Verknüpfung der Übersetzung der zusätzlichen Zahnradstufe 20 mit der die niedrigere Übersetzung der beiden Zahnradstufen 23, 25 aufweisenden Zahnradstufe 23 des Ausgleichsgetriebes 15, wobei die Kupplung 32 des Zahnrades 30 eingerückt ist und die Kupplung 26 das Zahnrad 27 mit der Ausgangswelle 14 verbinden kann, aber nicht muß. Die übrigen Vorwärtsgänge I bis VI und der Rückwärtsgang R sind mit den entsprechenden Gängen der Ausführungsform 48 gemäß der Tabelle der Fig. 3 identisch.

Bei der Ausführungsform 48b der Fig. 8 des erfindungsgemäßen Zahnräderwechselgetriebes ist ein gegenüber dem 6-Gang-Getriebe 48 der Fig. 1 zusätzlicher Gang dadurch gebildet, daß an dem entgegengesetzt zum Ausgleichsgetriebe 15 liegenden Wellenende der Eingangswelle 13 eine zusätzliche vierte Zahnradstufe 21 angeordnet ist, welche von allen vier Zahnradstufen 17 bis 19 und 21 - die Ausführungsform 48b der Fig. 8 ist im übrigen mit der Ausführungsform 48 der Fig. 1 identisch - die höchste Übersetzung aufweist. Das drehfest auf der Eingangswelle 13 sitzende Zahnrad 30b der Zahnradstufe 21 kämmt mit dem zugehörigen Ausgangszahnrad 49, welches drehbar auf der Ausgangswelle 14 gelagert und durch eine ein- und ausrückbare Kupplung 33 mit der Ausgangswelle 14 verbunden ist.

Während die Bildung der Gänge II bis VII und des Rückwärtsgange R bei der Ausführungsform 48b in bezug auf die Gänge I bis VI und R der Tabelle der Fig. 3 für die Ausführungsform 48 der Fig. 1 identisch ist, wird bei der Ausführungsform 48b ein zusätzlicher Gang - in diesem Fall der I. Gang - durch die Verknüpfung der höchsten Übersetzung der Zahnradstufe 21 mit der höheren der beiden Übersetzungen der Zahnradstufen 23 und 25, also in diesem Falle der Zahnradstufe 25 gemäß der Tabelle der Fig. 8a gebildet, welche wiederum in bezug auf den Kraftfluß in den einzelnen Gängen selbstinterpretierend ist.

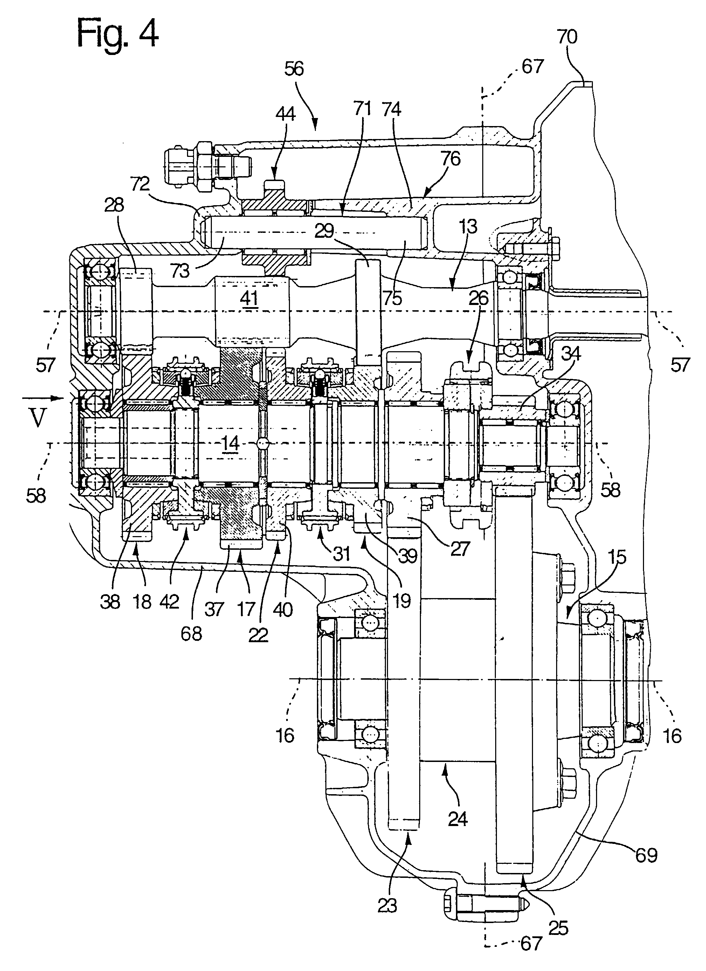

In baulicher Hinsicht kann die Ausgestaltung des Zahnräderwechselgetriebes 48 gemäß den Fign. 4 bis 6 so getroffen sein, daß ein Getriebegehäuse 56 eine erste signifikante Gehäuseebene 55-55 aufweist, welche die parallelen Drehachsen 57-57 und 58-58 von Ein- und Ausgangswelle 13 und 14 enthält. Das Getriebegehäuse 56 weist eine zweite signifikante Gehäuseebene 59-59 auf, welche die Drehachse 58-58 der Ausgangswelle 14 und die Zentralachse 16-16 de Ausgleichsgetriebes 15 enthält und zusammen mit der ersten Gehäuseebene 55-55 einen stumpfen Winkel einschließt. Das Getriebegehäuse 56 weist eine dritte signifikante Gehäuseebene 60-60 auf, welche zwischen erster und zweiter Gehäuseebene liegt und die Drehachse 58-58 der Ausgangswelle 14 und die zur Drehachse 58-58 parallele geometrische Achse 61-61 einer Lagerachse 62-62 enthält.

Auf der Lagerachse 62 sind eine Schaltgabel 51, welche mit der Schiebemuffe der Wechselkupplung 42 in Eingriff steht, eine Schaltgabel 50, welche mit der Schiebemuffe der Wechselkupplung 31 in Eingriff steht, und eine Schaltgabel 52, welche mit der Schiebemuffe der Wechselkupplung 26 in Eingriff steht, so angeordnet, daß die Schaltgabeln 50 bis 52 durch Betätigung einer Schaltwalze 53 gegenüber der Ausgangswelle 14 achsparallel verschiebbar sind.

Das Getriebegehäuse 56 weist eine vierte signifikante Gehäuseebene 63-63 auf, welche etwa parallel zu der ersten Gehäuseebene 55-55 liegt und die geometrische Achse 61-61 der Lagerachse 62 sowie die zur geometrischen Achse 61-61 parallele Drehachse 64-64 der Schaltwalze 53 enthält.

Das Getriebegehäuse 56 weist eine fünfte signifikante Gehäuseebene 66-66 auf, welche in Einbaulage etwa waagerecht angeordnet ist und die Drehachse 64-64 der Schaltwalze 53 und die zur Drehachse 64-64 parallele Drehachse 65-65 eines Schrittmotores 54 enthält, welcher die Schaltwalze 53 über eine Zahnradstufe 77 antreibt. Die Drehachse 65-65 des Schrittmotores 54 liegt noch in der ersten Gehäuseebene 55-55 so, daß die Drehachse 57-57 der Eingangswelle 13 zwischen den Drehachsen 58-58 und 65-65 liegt.

Das Getriebegehäuse 56 ist in einer senkrecht zu den Getriebewellen 13, 14 und etwa mittig zum Ausgleichsgetriebe 15 liegenden Trennebene 67-67 in ein die Zahnradstufen 17 bis 19 und 22 vollständig sowie die Getriebewellen 13, 14 und das Ausgleichsgetriebe 15 anteilig aufnehmendes Rädergehäuse 68 und in ein mit einer Kupplungsglocke 70 zur Aufnahme einer Anfahrkupplung einteilig ausgebildetes Adaptergehäuse 69 unterteilt.

Das Zwischenzahnrad 44 der Zahnradstufe 22 für den Rückwärtsgang ist auf einem zur Eingangswelle 13 parallelen Lagerbolzen 71 für sich drehbar gelagert, dessen Bolzenenden 73 und 75 in je einer korrespondierenden Aufnahme 72 und 74 des Rädergehäuses 68 und des Adaptergehäuses 69 fixiert sind. Die Aufnahme 74 liegt in einer Konsole 76, welche mit dem Adaptergehäuse 69 einteilig ausgebildet ist und sich in Längsrichtung der Eingangswelle 13 über die Trennebene 67-67 hinaus in das Rädergehäuse 68 hinein erstreckt.

## Patentansprüche

1. Zahnräderwechselgetriebe (48 in Fig.1 oder 48a in Fig.7 oder 48b in Fig.8) für ein Kraftfahrzeug, bei dem eine Ausgangswelle (14) durch wenigstens drei Zahnradstufen (17 bis 19) zur Bildung von Vorwärtsgängen und durch eine Zahnradstufe (22) zur Bildung eines Rückwärtsganges mit einer parallelen Eingangswelle (13) sowie durch zwei Zahnradstufen (23 u.25) mit einem eingangsseitigen Getriebeglied (24) eines in bezug auf seine Zentralachse (16-16) parallel zu Ein- und Ausgangswelle (13u.14) angeordneten dreigliedrigen Ausgleichsgetriebes (15) der Umlaufräderbauart jeweils wahlweise in Antriebsverbindung bringbar ist und die beiden zur Zentralachse (16-16) zentrischen ausgangsseitigen Getriebeglieder (46u.47) des Ausgleichsgetriebes (15) jeweils mit einem Fahrzeugrad einer Antriebsachse kuppelbar sind, und bei dem die beiden eingangsseitigen Zahnräder (28u.29) von zwei (18u.19) der zur Bildung von Vorwärtsgängen als Antriebsverbindung zwischen Ein- und Ausgangswelle (13u.14) verwendeten Zahnradstufen (17 bis 19) und das eingangsseitige Zahnrad (41) der zur Bildung des Rückwärtsganges als Antriebsverbindung zwischen Ein- und Ausgangswelle (13u.14) verwendeten Zahnradstufe (22) jeweils drehfest zur Eingangswelle (13) angeordnet sind sowie ein für sich drehbar gelagertes Zwischenzahnrad (44) sowohl mit dem eingangsseitigen als auch mit dem ausgangsseitigen Zahnrad (41u.40) der zur Bildung des Rückwärtsganges als Antriebsverbindung zwischen Ein- und Ausgangswelle (13u.14) verwendeten Zahnradstufe (22)in Kämmeingriff bringbar ist,
**dadurch gekennzeichnet,** daß das Zwischenzahnrad (44) sowohl mit dem eingangsseitigen zur Eingangswelle (13) drehfesten Zahnrad (41) der von drei in ihrer Übersetzung aufeinander folgenden, zu Bildung von Vorwärtsgängen als Antriebsverbindung zwischen Ein- und Ausgangswelle (13 und 14) verwendeten Zahnradstufen (17 bis 19) die größte Übersetzung aufweisenden Zahnradstufe (17) als auch mit dem ausgangsseitigen Zahnrad (40) der zur Bildung des Rückwärtsganges als Antriebsverbindung zwischen Ein- und Ausgangswelle (13 und 14) verwendeten Zahnradstufe (22) ständig kämmt, und daß die beiden ausgangsseitigen Zahnräder (39 und 40) der von den drei in ihrer Übersetzung aufeinander folgenden, zur Bildung von Vorwärtsgängen als Antriebsverbindung zwischen Ein- und Ausgangswelle (13 und 14) verwendeten Zahnradstufen (17 bis 19) die kleinste Übersetzung aufweisenden Zahnradstufe (19) und der zur Bildung des Rückwärtsganges als Antriebsverbindung zwischen Ein- und Ausgangswelle (13 und 14) verwendeten Zahnradstufe (22) drehbar und axial zueinander benachbart auf der Ausgangswelle (14) angeordnet sowie mit der Ausgangswelle (14) kuppelbar sind.

2. Zahnräderwechselgetriebe nach Anspruch 1,
**dadurch gekennzeichnet,**
daß die beiden ausgangsseitigen Zahnräder (39 und 40) der von den drei in ihrer Übersetzung aufeinander folgenden, zur Bildung von Vorwärtsgängen als Antriebsverbindung zwischen Ein- und Ausgangswelle (13 und 14) verwendeten Zahnradstufen (17 bis 19) die kleinste Übersetzung aufweisenden Zahnradstufe (19) und der zur Bildung des Rückwärtsganges als Antriebsverbindung zwischen Ein- und Ausgangswelle (13 und 14) verwendeten Zahnradstufe (22) drehbar und axial zueinander benachbart auf der Ausgangswelle (14) angeordnet sowie mit der Ausgangswelle (14) kuppelbar sind.

3. Zahnräderwechselgetriebe nach Anspruch 1 oder 2,
**dadurch gekennzeichnet,**
daß das ausgangsseitige Zahnrad (39) der von den drei in ihrer Übersetzung aufeinander folgenden, zur Bildung von Vorwärtsgängen als Antriebsverbindung zwischen Ein- und Ausgangswelle (13 und 14) verwendeten Zahnradstufen (17 bis 19) die kleinste Übersetzung aufweisenden Zahnradstufe (19) axial zwischen dem ausgangsseitigen Zahnrad (40) der zur Bildung des Rückwärtsganges als Antriebsverbindung zwischen Ein- und Ausgangswelle (13 und 14) verwendeten Zahnradstufe (22) einerseits und den eingangsseitigen Zahnrädern (27, 34) der als Antriebsverbindung zwischen Ausgangswelle (14) und Ausgleichsgetriebe (15) verwendeten Zahnradstufen (23, 25) andererseits angeordnet ist.

4. Zahnräderwechselgetriebe nach einem der Ansprüche 1 bis 3,
**dadurch gekennzeichnet,**
daß das eingangsseitige Zahnrad (28) der von den drei in ihrer Übersetzung aufeinander folgenden, zur Bildung von Vorwärtsgängen als Antriebsverbindung zwischen Ein- und Ausgangswelle (13 und 14) verwendeten Zahnradstufen (17 bis 19) die mittlere Übersetzung aufweisenden Zahnradstufe (18) axial unmittelbar neben dem eingangsseitigen Zahnrad (41) - auf dessen dem Ausgleichsgetriebe (15) abgekehrten Stirnseite bezogen - der von den drei in ihrer Übersetzung aufeinander folgenden, zur Bildung von Vorwärtsgängen als Antriebsverbindung zwischen Ein- und Ausgangswelle (13 und 14) verwendeten Zahnradstufen (17 bis 19) die größte Übersetzung aufweisenden Zahnradstufe (17) angeordnet ist.

5. Zahnräderwechselgetriebe nach einem der Ansprüche 1 bis 4,
**dadurch gekennzeichnet,**
daß die beiden ausgangsseitigen Zahnräder (37 und 38) der von den drei in ihrer Übersetzung aufeinander folgenden, zur Bildung von Vorwärtsgängen als Antriebsverbindung zwischen Ein- und Ausgangswelle (13 und 14) verwendeten Zahnradstufen (17 bis 19) die höchste Übersetzung und die mittlere Übersetzung aufweisenden Zahnradstufen (17 und 18) mit einer Wechselkupplung (42) verbunden sind.

6. Zahnräderwechselgetriebe nach einem der Ansprüche 1 bis 5,
**dadurch gekennzeichnet,**
daß eine vierte Zahnradstufe (20 oder 21) zur Bildung von Vorwärtsgängen als Antriebsverbindung zwischen Ein- und Ausgangswelle (13 und 14) verwendet ist und die kleinste oder größte Übersetzung dieser vier Zahnradstufen (17 bis 20 oder 21) aufweist.

7. Zahnräderwechselgetriebe nach Anspruch 6,
**dadurch gekennzeichnet,**
daß das eingangsseitige Zahnrad (30) der von den vier zur Bildung von Vorwärtsgängen als Antriebsverbindung zwischen Ein- und Ausgangswelle (13 und 14) verwendeten Zahnradstufen (17 bis 20) die kleinste Übersetzung aufweisenden Zahnradstufe (20 in Fig. 7) sowohl wahlweise mit der Eingangswelle (13) kuppelbar ist als auch ständig mit dem eingangsseitigen Zahnrad (27 oder 34) einer der als Antriebsverbindung zwischen Ausgangswelle (14) und Ausgleichsgetriebe (15) verwendeten Zahnradstufen (23, 25) kämmt.

8. Zahnräderwechselgetriebe nach Anspruch 7,
**dadurch gekennzeichnet,**
daß das eingangsseitige Zahnrad (30) der von den vier zur Bildung von Vorwärtsgängen als Antriebsverbindung zwischen Ein- und Ausgangswelle (13 und 14) verwendeten Zahnradstufen (17 bis 20) die kleinste Übersetzung aufweisenden Zahnradstufe (20 in Fig. 7) für sich mit einer Kupplung (32) verbunden ist.

9. Zahnräderwechselgetriebe nach Anspruch 6,
**dadurch gekennzeichnet,**
daß das eingangsseitige Zahnrad (30b) der von den vier zur Bildung von Vorwärtsgängen als Antriebsverbindung zwischen Ein- und Ausgangswelle (13 und 14) verwendeten Zahnradstufen (17 bis 19 und 21) die größte Übersetzung aufweisenden Zahnradstufe (21 in Fig. 8) an dem zum Ausgleichsgetriebe (15) entgegengesetzt liegenden Wellenende der Eingangswelle (13) angeordnet und das zugehörige ausgangsseitige Zahnrad (49) wahlweise mit der Ausgangswelle (14) kuppelbar ist.

10. Zahnräderwechselgetriebe nach Anspruch 9,
**dadurch gekennzeichnet,**
daß das ausgangsseitige Zahnrad (49) von den vier zur Bildung von Vorwärtsgängen als Antriebsverbindung zwischen Ein- und Ausgangswelle (13 und 14) verwendeten Zahnradstufen (17 bis 19 und 21) die größte Übersetzung aufweisenden Zahnradstufe (21 in Fig. 8) für sich mit einer Kupplung (33) verbunden ist.

11. Zahnräderwechselgetriebe nach einem der Ansprüche 1 bis 10,
**dadurch gekennzeichnet,**
daß sowohl die Kupplungen (31 bis 33 und 42), welche den als Antriebsverbindung zwischen Ein- und Ausgangswelle (13 und 14) verwendeten Zahnradstufen (17 bis 20 oder 21) zugeordnet sind, als auch die Kupplungen (26), welche den als Antriebsverbindung zwischen Ausgangswelle (14) und Ausgleichsgetriebe (15) verwendeten Zahnradstufen (23, 25)zugeordnet sind, über eine jeweilige Schaltgabel (50 bis 52) durch eine Schaltwalze (53) betätigbar sind.

12. Zahnräderwechselgetriebe nach Anspruch 11,
**dadurch gekennzeichnet,**
daß die Schaltwalze (53) durch einen Schrittmotor (54) antreibbar ist.

13. Zahnräderwechselgetriebe nach Anspruch 11 oder 12,
**dadurch gekennzeichnet,**
daß eine erste Gehäuseebene (55-55) eines Getriebegehäuses (56) die Drehachsen (57-57 und 58-58) von Ein- und Ausgangswelle (13 und 14) enthält, daß eine zweite Gehäuseebene (59-59) des Getriebegehäuses (56) die Drehache (58-58) der Ausgangswelle (14) und die Zentralachse (16-16) des Ausgleichsgetriebes (15) enthält, und daß eine zwischen erster und zweiter Gehäuseebene (55-55 und 59-59) liegende dritte Gehäuseebene (60-60) des Getriebegehäuses (56) die Drehachse (58-58) der Ausgangswelle (14) und die geometrische Achse (61-61) einer Lagerachse (62) enthält, und daß die Schaltgabeln (50 bis 52) unter vermittlung der Lagerachse (62) axial verschiebbar gegenüber der zugehörigen Getriebewelle (14 in den Fign. 1 bis 4 und 8 oder 13 bzw. 14 in Fig. 7) angeordnet sind.

14. Zahnräderwechselgetriebe nach Anspruch 13,
**dadurch gekennzeichnet,**
daß eine zu der ersten Gehäuseebene (55-55) im wesentlichen parallel liegende vierte Gehäuseebene (63-63) des Getriebegehäuses (56) die geometrische Achse (61-61) der Lagerachse (62) für die Schaltgabeln (50 bis 52) als auch die Drehachse (64-64) der Schaltwalze (53) enthält.

15. Zahnräderwechselgetriebe nach einem der Ansprüche 11 bis 14,
**dadurch gekennzeichnet,**
daß die erste Gehäuseebene (55-55) zusätzlich die Drehachse (65-65) des Schrittmotores (54) enthält und die Drehachse (57-57) der Eingangswelle (13) zwischen den Drehachsen (58-58 und 65-65) von Ausgangswelle (14) und Schrittmotor (54) liegt, und daß eine in Einbaulage etwa waagerecht liegende fünfte Gehäuseebene (66-66) die Drehachsen (64-64 und 65-65) von Schaltwalze (53) und Schrittmotor (54) enthält.

16. Zahnräderwechselgetriebe nach einem der Ansprüche 1 bis 14,
**dadurch gekennzeichnet,**
daß das Getriebegehäuse (56) in einer zu den Getriebewellen (13, 14) senkrechten Trennebene (67-67) in ein die als Antriebsverbindung zwischen Ein- und Ausgangswelle (13 und 14) verwendeten Zahnradstufen (17 bis 19 und 22) vollständig und das Ausgleichsgetriebe (15) anteilig aufnehmendes Rädergehäuse (68) und in ein anflanschbares Adaptergehäuse (69) mit einer einteilig ausgebildeten Kupplungslocke (70) zur Aufnahme einer Anfahrkupplung unterteilt ist, daß in dem Getriebegehäuse (56) ein zur Eingangswelle (13) paralleler Lagerbolzen (71) für das Zwischenzahnrad (44) gehaltert ist, daß das Rädergehäuse (68) eine Aufnahme (72) für die Fixierung des einen Bolzenendes (73) des Lagerbolzens (71) und das Adaptergehäuse (69) eine Aufnahme (74) für die Fixierung des anderen Bolzenendes (75) des Lagerbolzens (71) aufweist, und daß das Adaptergehäuse (69) eine in Längsrichtung des Lagerbolzens (71) über die Trennebene (67-67) hinaus in das Rädergehäuse (68) hineinragende Konsole (76) aufweist, welche mit der Aufnahme (74) versehen ist.

## Claims

1. A train of change transmission (48 in Fig. 1 or 48a in Fig. 7 or 48b in Fig. 8) for a motor vehicle in which an output shaft (14) can be brought into drive connection either by at least three gearwheel stages (17 to 19) for the formation of forward gears and one gearwheel stage (22) for the formation of a reverse gear with a parallel input shaft (13) or, alternatively, by two gearwheel stages (23 and 25) with an input-side gear train member (24) on a three-member differential gear (15) of the planetary gear type positioned parallel to the input and output shafts (13 and 14) relative to its central axis (16-16), and the two output-side gear train members on the differential gear which are positioned centrally relative to the central axis (16-16) can each be coupled with a vehicle wheel on a drive axle, and in which the two input-side gearwheels (28 and 29) oftwo (18 and 19) of the gearwheel stages (17 to 19) used to form forward gears as the drive connection between the input shaft and the output shaft (13 and 14) and the input-side gearwheel (41) of the gearwheel stage (22) used to form the reverse gear as the drive connection between the input shaft and the output shaft (13 and 14) are all positioned in such a manner that they cannot be rotated in relation to the input shaft (13), and an intermediate gearwheel (44) which is independently located in such a manner that it can rotate can be meshed with both the input-side and the output-side gearwheels (41 and 40) of the gearwheel stage (22) used to form the reverse gear as the drive connection between the input shaft and the output shaft (13 and 14),
**characterised in that**
the intermediate gearwheel (44) is constantly enmeshed with both the input-side gearwheel (41) which cannot be rotated in relation to the input shaft (13) of the gearwheel stage (17) which has the greatest gear ratio of the three gearwheel stages (17 to 19) with successive transmission used to form forward gears as the drive connection between the input and output shafts (13 and 14) and the output-side gearwheel (40) of the gearwheel stage (22) used to form the reverse gear as the drive connection between the input and output shafts (13 and 14), and that the two output-side gearwheels (39 and 40) of the gearwheel stage (19) with the smallest gear ratio ofthe three gearwheel stages (17 to 19) with successive transmission used to form forward gears as the drive connection between the input and output shafts (13 and 14) and the gearwheel stage (22) used to form the reverse gear as the drive connection between the input and output shafts (13 and 14) are positioned next to one another in an axial relationship on the output shaft (14) in such a manner that they can rotate and can be coupled with the output shaft (14).

2. A train of change transmission in accordance with Claim 1,
**characterised in that**
the two output-side gearwheels (39 and 40) of the gearwheel stage (19) with the smallest gear ratio of the three gearwheel stages (17 to 19) with successive transmission used to form forward gears as the drive connection between the input and output shafts (13 and 14) and the gearwheel stage (22) used to form the reverse gear as the drive connection between the input and output shafts (13 and 14) are positioned next to one another in an axial relationship on the output shaft (14) in such a manner that they can rotate and can be coupled with the output shaft (14).

3. A train of change transmission in accordance with one of Claims 1 or 2,
**characterised in that**
the output-side gearwheel (39) of the gearwheel stage (19) with the smallest gear ratio of the three gearwheel stages (17 to 19) with successive transmission used to form forward gears as the drive connection between the input and output shafts (13 and 14) is positioned axially between the output-side gearwheel (40) of the gearwheel stage (22) used to form the reverse gear as the drive connection between the input and output shafts (13 and 14) on one hand and the input-side gearwheels (27, 34) of the gearwheel stages (23, 25) used as the drive connection between the output shaft (14) and the differential gear (15) on the other.

4. A train of change transmission in accordance with one of Claims 1 to 3,
**characterised in that**
the input-side gearwheel (28) of the gearwheel stage (18) with the middle gear ratio of the three gearwheel stages (17 to 19) with successive transmission used to form forward gears as the drive connection between the input and output shafts (13 and 14) is positioned axially immediately next to the input-side gearwheel (41) - in relation to the end facing away from the differential gear (15) - of the gearwheel stage (17) with the greatest gear ratio of the three gearwheel stages (17 to 19) with successive transmission used to form forward gears as the drive connection between the input and output shafts (13 and 14).

5. A train of change transmission in accordance with one of Claims 1 to 4,
**characterised in that**
the two output-side gearwheels (37 and 38) of the gearwheel stages (17 to 19) with the highest and the middle gear ratios of the three gearwheel stages (17 to 19) with successive transmission used to form forward gears as the drive connection between the input and output shafts (13 and 14) are connected to an alternating clutch (42).

6. A train of change transmission in accordance with one of Claims 1 to 5,
**characterised in that**
a fourth gearwheel stage (20 or 21) is used to form forward gears as the drive connection between the input and output shafts (13 and 14) and has the smallest or greatest gear ratio of these four gearwheel stages (17 to 20 or 21).

7. A train of change transmission in accordance with Claim 6,
**characterised in that**
the input-side gearwheel (30) of the gearwheel stage (20 in Fig. 7) with the smallest gear ratio of the four gearwheel stages (17 to 20) used to form forward gears as the drive connection between the input and output shafts (13 and 14) can either be coupled with the input shaft (13) or alternatively is constantly enmeshed with the input-side gearwheel (27 or 34) of one of the gearwheel stages (23, 25) used as the drive connection between the output shaft (14) and the differential gear (15).

8. A train of change transmission in accordance with Claim 7,
**characterised in that**
the input-side gearwheel (30) of the gearwheel stage (20 in Fig. 7) with the smallest gear ratio of the four gearwheel stages (17 to 20) used to form forward gears as the drive connection between the input and output shafts (13 and 14) is independently connected to a clutch (32).

9. A train of change transmission in accordance with Claim 6,
**characterised in that**
the input-side gearwheel (30b) of the gearwheel stage (21 in Fig. 8) with the greatest gear ratio of the four gearwheel stages (17 to 19 and 21) used to form forward gears as the drive connection between the input and output shafts (13 and 14) is positioned on the end of the input shaft (13) furthest away from the differential gear (15) and the corresponding output-side gearwheel (49) can be coupled with the output shaft (14).

10. A train of change transmission in accordance with Claim 9,
**characterised in that**
the output-side gearwheel (49) of the gearwheel stage (21 in Fig. 8) with the greatest gear ratio of the four gearwheel stages (17 to 19 and 21) used to form forward gears as the drive connection between the input and output shafts (13 and 14) is independently connected to a clutch (33).

11. A train of change transmission in accordance with one of Claims 1 to 10,
**characterised in that**
both the clutches (31 to 33 and 42) which are connected to the gearwheel stages (17 to 20 or 21) used as the drive connection between the input and output shafts (13 and 14) and the clutches (26) which are connected to the gearwheel stages (23, 25) used as the drive connection between the output shaft (14) and the differential gear (15) can be actuated by means of a contactor controller (53) via selector forks (50 to 52).

12. A train of change transmission in accordance with Claim 11,
**characterised in that**
the contactor controller (53) can be driven by a step motor (54).

13. A train of change transmission in accordance with Claim 11 or 12,
**characterised in that**
a first casing plane (55-55) of a transmission casing (56) contains the axes of rotation (57-57 and 58-58) of the input and output shafts (13 and 14), that a second casing plane (59-59) of the transmission casing (56) contains the axis of rotation (58-58) of the output shaft (14) and the central axis (16-16) of the differential gear (15) and that a third casing plane (60-60) of the transmission casing (56) lying between the first and second casing planes (55-55 and 59-59) contains the axis of rotation (58-58) of the output shaft (14) and the geometric axis (61-61) of a bearing pin (62), and that the selector forks (50 to 52) are positioned such that they can be moved axially in relation to the corresponding transmission shaft (14 in Figs. 1 to 4 and 8 or 13/14 in Fig. 7) by shifting the bearing pin (62).

14. A train of change transmission in accordance with Claim 13,
**characterised in that**
a fourth casing plane (63-63) of the transmission casing (56) which lies essentially parallel to the first casing plane (55-55) contains the geometric axis (61-61) of the bearing pin (62) for the selector forks (50 to 52) and the axis of rotation (64-64) of the contactor controller (53).

15. A train of change transmission in accordance with one of Claims 11 to 14,
**characterised in that**
the first casing plane (55-55) also contains the axis of rotation (65-65) of the step motor (54) and the axis of rotation (57-57) of the input shaft (13) lies between the axes of rotation (58-58 and 65-65) of the output shaft and the step motor (54), and that a fifth casing plane (66-66) which lies approximately horizontal in the fitting position contains the axes of rotation (64-64 and 65-65) of the contactor controller (53) and the step motor (54).

16. A train of change transmission in accordance with one of Claims 1 to 14,
**characterised in that**
in a parting plane (67-67) vertical to the transmission shafts (13, 14) the transmission casing (56) is divided into a gearwheel casing (68) which receives all the gearwheel stages used as the drive connection between the input and output shafts (13 and 14) and part ofthe differential gear (15) and a flange-mountable adapter casing (69) with a clutch bracket (70) designed as one piece to receive a starting clutch, that fixed in the transmission casing (56) parallel to the input shaft (13) is a bearing pin (71) for the intermediate gearwheel (44), that the gearwheel casing (68) has a receiver (72) for fixing one end (73) of the bearing pin (71) and the adapter casing (69) has a receiver (74) for fixing the other end (75) of the bearing pin (71), and that the adapter casing (69) has a console (76) which extends beyond the parting plane (67-67) into the gearwheel casing (68) in the longitudinal direction of the bearing pin (71) and which is provided with a receiver (74).

## Revendications

1. Boîte de vitesses à engrenages (48 sur la figure 1, 48a sur la figure 7 ou 48b sur la figure 8) pour un véhicule automobile, dans lequel un arbre de sortie (14) peut être relié au choix selon une liaison motrice à l'aide d'au moins trois étages de pignons (17 à 19) pour l'établissement de vitesses de marche avant et par un étage de pignons (22) pour l'établissement d'une vitesse de marche arrière, à un arbre d'entrée parallèle (13) ainsi que par deux étages de pignons (23 et 25), à un organe de transmission (24), situé côté entrée, d'un différentiel (15) formé de trois éléments, dont l'axe central (16-16) est parallèle à l'arbre d'entrée et à l'arbre de sortie (13 et 14), du type à pignons satellites, et les deux éléments de transmission (46 et 47) situés côté sortie, qui sont centrés sur l'axe central (16-16), du différentiel (15), peuvent être couplés respectivement à une roue du véhicule, que porte un essieu moteur, et dans lequel les deux pignons (28 et 29) situés côté entrée de deux (18 et 19) des étages de pignons (17 à 19), utilisé sous la forme d'une liaison motrice entre l'arbre d'entrée et l'arbre de sortie (13 et 14) pour établir des vitesses de marche avant, et le pignon (41) situé côté entrée de l'étage d'entrée (22), utilisé en tant que liaison motrice entre l'arbre d'entrée et l'arbre de sortie (13 et 14) pour établir la vitesse de marche arrière, sont montés respectivement d'une manière bloquée en rotation sur l'arbre d'entrée (13), et un pignon intermédiaire (44), qui est monté de manière à pouvoir tourner sur lui-même, peut être amené à engrener aussi bien avec le pignon situé côté entrée qu'avec le pignon situé côté sortie (41 et 40) de la liaison de l'étage de pignons (22) utilisé, en tant que liaison motrice entre l'arbre d'entrée et l'arbre de sortie (13 et 14) pour établir la vitesse de marche arrière,
caractérisée en ce que le pignon intermédiaire (44) engrène en permanence aussi bien avec le pignon (41), qui est situé côté entrée et est solidaire en rotation de l'arbre d'entrée (13), de l'étage de pignons (17), qui possède la démultiplication maximale parmi trois étages de pignons (17 à 19) dont les démultiplications se succèdent et qui sont utilisés pour l'établissement de vitesses de marche avant, en tant que liaison d'entraînement entre l'arbre d'entrée et l'arbre de sortie (13 et 14), qu'avec le pignon (40) situé côté sortie de l'étage de pignons (22) qui est utilisé en tant que liaison motrice entre le pignon d'entrée et le pignon de sortie (13 et 14) pour établir la vitesse de marche arrière, et que les deux pignons (39 et 40) situés côté sortie de l'étage de pignons (19), qui possède la plus faible démultiplication parmi les trois étages de pignons (17 à 19), dont les démultiplications se succèdent et qui sont utilisés, en tant que liaison motrice entre l'arbre d'entrée et l'arbre de sortie (13 et 14), pour établir des vitesses de marche avant, et de l'étage de pignons (22), qui est utilisé, en tant que liaison motrice entre l'arbre d'entrée et l'arbre de sortie (13 et 14), pour établir la vitesse de marche arrière, sont disposés de manière à pouvoir tourner en étant réciproquement voisins axialement sur l'arbre de sortie (14) et peuvent être accouplés à l'arbre de sortie (14).

2. Boîte de vitesses à engrenages selon la revendication 1, caractérisée en ce
que les deux pignons (39 et 40) situés côté sortie de l'étage de pignons (19), qui possède la plus faible démultiplication parmi les trois étages de pignons (17 à 19), dont les démultiplications se suivent et qui sont utilisés, en tant que liaison motrice entre l'arbre d'entrée et l'arbre de sortie (13 et 14) pour établir les vitesses de marche avant, et de l'étage de pignons (22), utilisé en tant que liaison motrice entre l'arbre d'entrée et l'arbre de sortie (13 et 14) pour établir la vitesse de marche arrière, sont disposés de manière à pouvoir tourner axialement entre eux sur l'arbre de sortie (14) et peuvent être accouplés à l'arbre de sortie (14).

3. Boîte de vitesses à engrenages selon la revendication 1 ou 2, caractérisée en ce
que le pignon (39) situé côté sortie de l'étage de pignons (19), qui présente la plus faible démultiplication parmi les trois étages de pignons (17 à 19), dont les démultiplications se succèdent et qui sont utilisés en tant que liaison motrice entre l'arbre et l'arbre de sortie (13 et 14) pour établir des vitesses de marche avant, est disposé axialement entre d'une part le pignon (40) situé côté sortie de l'étage de pignons (22) utilisé en tant que liaison motrice entre le pignon d'entrée et le pignon de sortie (13 et 14), pour établir la vitesse de marche arrière, et d'autre part les pignons (27,34) situés côté entrée des étages de pignons (23,25) utilisés en tant que liaison motrice entre l'arbre de sortie (14) et le différentiel (15).

4. Boîte de vitesses à engrenages selon l'une des revendications 1 à 3, caractérisée en ce
que le pignon (28) situé côté entrée de l'étage de pignons (18), qui possède la démultiplication médiane parmi les trois étages de pignons (17 à 19), dont les démultiplications se succèdent et qui sont utilisés en tant que liaison motrice entre l'arbre d'entrée et l'arbre de sortie (13 et 14) pour établir des vitesses de marche avant, est disposé axialement directement entre le pignon (41) situé côté entrée - par rapport à sa face frontale tournée à l'opposé du différentiel (15) - de l'étage de pignons (17) qui présente la démultiplication maximale parmi les trois étages de pignons (17 à 19), dont les démultiplications se succèdent et qui sont utilisés en tant que liaison motrice entre l'arbre d'entrée et l'arbre de sortie (13 et 14), pour établir des vitesses de marche avant.

5. Boîte de vitesses à engrenages selon l'une des revendications 1 à 4, caractérisée en ce
que les deux pignons (31 et 32) situés côté sortie des étages de pignons (17 à 19), qui possèdent la démultiplication maximale et la démultiplication médiane parmi les trois étages de pignons (17 à 19), dont les démultiplications se succèdent et qui sont utilisés en tant que liaison motrice entre l'arbre d'entrée et l'arbre de sortie (13 et 14) pour établir des vitesses de marche avant, sont reliés à un embrayage de commutation (42).

6. Boîte de vitesses à engrenages selon l'une des revendications 1 à 5, caractérisée en ce
qu'un quatrième étage de pignons (20 ou 21) est utilisé en tant que liaison motrice entre l'arbre d'entrée et l'arbre de sortie (13 et 14) pour établir des vitesses de marche avant et possède la démultiplication minimale ou la démultiplication maximale parmi ces quatre étages de pignons (17 à 20 ou 21).

7. Boîte de vitesses à engrenages selon la revendication 6, caractérisée en ce
que le pignon (30) situé côté entrée et l'étage de pignons (20 sur la figure 7), qui possède la démultiplication minimale parmi les quatre étages de pignons (17 à 20) utilisés en tant que liaison motrice entre l'arbre d'entrée et l'arbre de sortie (13 et 14) pour établir les vitesses de marche avant, peut au choix être accouplé à l'arbre d'entrée (13) ou engrener également en permanence avec le pignon situé côté entrée (27 ou 34) de l'un des étages de pignons (23,25) utilisés en tant que liaison motrice entre l'arbre d'entrée (14) et le différentiel (15).

8. Boîte de vitesses à engrenages selon la revendication 7, caractérisée en ce
que le pignon (30) situé côté entrée de l'étage de pignons (20 sur la figure 7) qui possède la démultiplication minimale parmi les quatre étages de pignons (17 à 20) utilisés comme liaison motrice entre l'arbre d'entrée et l'arbre de sortie (13 et 14) pour établir des vitesses de marche avant, est relié en soi à un embrayage (32).

9. Boîte de vitesses à engrenages selon la revendication 6, caractérisée en ce
que le pignon situé côté entrée (30b) de l'étage de pignons (21 sur la figure 8), qui possède la démultiplication maximale parmi les quatre étages de pignons (17 à 19 et 21) utilisés en tant que liaison motrice entre l'arbre d'entrée et l'arbre de sortie (13 et 14) pour établir des vitesses de marche avant, est disposé sur l'extrémité de l'arbre d'entrée (13), qui est située à l'opposé du différentiel (15), et le pignon associé (49), situé côté sortie, peut être accouplé au choix à l'arbre de sortie (14).

10. Boîte de vitesses à engrenages selon la revendication 9, caractérisée en ce
que le pignon situé côté sortie (49) de l'étage de pignons (21 sur la figure 8), qui possède la démultiplication maximale parmi les quatre étages de pignons (17 à 19 et 21) utilisés en tant que liaison motrice entre l'arbre d'entrée et l'arbre de sortie (13 et 14) pour établir des vitesses de marche avant, est relié en soi à un embrayage (33).

11. Boîte de vitesses à engrenages selon l'une des revendications 1 à 10, caractérisée en ce
qu'aussi bien les embrayages (31 à 33 et 42), qui sont associés aux étages de pignons (17 à 20 ou 21) utilisés comme liaison motrice entre l'arbre d'entrée et l'arbre de sortie (13 et 14), que les embrayages (26), qui sont associés aux étages de pignons (23,25) utilisés en tant que liaison entre l'arbre de sortie (14) et le différentiel (15), peuvent être actionnés par un cylindre de commutation (53) par l'intermédiaire d'une fourche respective de changement de vitesse (50 à 52).

12. Boîte de vitesses à engrenages selon la revendication 11, caractérisée en ce que le cylindre de commutation (53) peut être entraîné par un moteur pas-à-pas (54).

13. Boîte de vitesses à engrenages selon la revendication 11 ou 12, caractérisée en ce
que le premier plan (55-55) d'un carter (56) de la boîte de vitesses contient les axes de rotation (57-57 et 58-58) d'un arbre d'entrée et d'un arbre de sortie (13 et 14), qu'un second plan (59-59) du carter (56) de la boîte de vitesses contient l'axe de rotation (58-58) de l'arbre de sortie (14) et l'axe central (16-16) du différentiel (15) et qu'un troisième plan (60-60) du carter (56) de la boîte de vitesses, qui est situé entre les premier et second plan (55-55 et 59-59) du carter contient l'axe de rotation (58-58) de l'arbre de sortie (14) et l'axe géométrique (61-61) d'un axe de palier (62) et que les fourches de commutation (50 à 52) sont disposées, moyennant la commutation de l'axe de palier (62), de manière à être déplaçables axialement par rapport à l'arbre associé (14 sur les figures 1 à 4 et 8 ou 13 ou 14 sur la figure 7) de la boîte de vitesses.

14. Boîte de vitesses à engrenages selon la revendication 13, caractérisée en ce
qu'un quatrième plan (63-63) du carter (56) de la boîte de vitesses, qui est sensiblement parallèle au premier plan (55-55) du carter, contient l'axe géométrique (61-61) de l'axe de palier (62) pour les fourches de commutation (50 à 52) ainsi que l'axe de rotation (64-64) du cylindre de commutation (53).

15. Boîte de vitesses à engrenages selon l'une des revendications 11 à 14, caractérisée en ce que
que le premier plan (55-55) du boîtier contient en outre l'axe de rotation (65-65) du moteur pas-à-pas (54) et que l'axe de rotation (57-57) de l'arbre d'entrée (13) est situé entre les axes de rotation (58-58 et 65-65) de l'arbre de sortie (14) et du moteur pas-à-pas (54), et qu'un cinquième plan (56-66) du carter qui est approximativement horizontal dans la position montée, contient les axes de rotation (64-64, 65-65) du cylindre de commutation (53) et du moteur pas-à-pas (54).

16. Boîte de vitesses à engrenages selon l'une des revendications 1 à 4, caractérisée en ce
que le carter (56) de la boîte de vitesses est subdivisé, dans un plan de séparation (67-67) perpendiculaire aux arbres (13,14) de la boîte de vitesses, le carter de roue (68) qui loge en totalité les étages de pignons (17 à 19 et 22) utilisés comme liaison motrice parmi les quatre étages de pignons (17 à 19 et 21) utilisés en tant que liaison motrice entre l'arbre d'entrée et l'arbre de sortie (13 et 14) et qui loge partiellement le différentiel (15), et en un carter d'adaptateur (69) pouvant être accordé par brides et comportant une cloche d'embrayage (70) agencée sous forme monobloc et servant à loger un embrayage de démarrage, qu'un axe de palier (71) qui est parallèle à l'arbre d'entrée (13) et est prévu pour le pignon intermédiaire (44) est retenu dans le carter (56) de la boîte de vitesses, que le carter d'engrenages (68) comporte un logement (72) pour la fixation d'une extrémité (73) de l'axe de palier (71) et que le carter d'adaptateur (69) comporte un logement (74) pour la fixation de l'autre extrémité (75) de l'axe de palier (71), et que le carter d'adaptateur (69) comporte une console (76) qui pénètre dans le carter d'engrenages (68) dans la direction longitudinale de l'axe de palier (71) au-delà du plan de séparation (67-67) et qui est équipée du logement (74).
